# EUROPÄISCHE PATENTSCHRIFT

(11) **EP 0 598 246 B1**
(45) Veröffentlichungstag und Bekanntmachung des Hinweises auf die Patenterteilung: **07.01.1999**
(21) Anmeldenummer: 93117196.1
(22) Anmeldetag: 22.10.1993
(51) Int. Cl.: A61C 13/12, B01D 46/42, B01D 46/24, B08B 15/04

(54) **Zahntechnischer Arbeitsplatz mit einem Arbeitstisch und einer Absaugeinrichtung mit einem Filtergerät**
Working place with a working table and a suction appliance provided with a filter device
Lieu de travail avec une table de travail et une installation d'aspiration pourvue d'un dispositif de filtrage

(30) Priorität: 22.10.1992 DE 4235714
(43) Veröffentlichungstag der Anmeldung: 25.05.1994
(73) Patentinhaber: KALTENBACH & VOIGT GMBH & CO., 88400 Biberach (DE)
(72) Erfinder: Buchmann, Siegfrid, D-88319 Aitrach (DE); Gapp, Wolfgang, D-88299 Leutkirch/Unterzeil (DE)
(74) Vertreter: Schmidt-Evers, Jürgen, Dipl.-Ing.

(56) Entgegenhaltungen:
- CH-A- 641 663
- DE-A- 2 913 871
- FR-A- 2 576 539
- US-A- 4 108 509

## Beschreibung

Die Erfindung bezieht sich auf einen zahntechnischen Arbeitstisch nach dem Oberbegriff des Anspruchs 1.

An einem zahntechnischen Arbeitstisch mit einem zahntechnischen Arbeitsplatz werden u.a. anderem auch spanabhebende Arbeiten durchgeführt, wie z.B. Schleifarbeiten an einem Zahnmodell oder einer Zahnprothese, wobei insbesondere dann, wenn es sich bei den verwendeten Werkstoffen um umweltschädliche Materialien handelt, für eine Absaugung und Ausfilterung der Späne und/oder des Staubes aus dem Absaugluftstrom erforderlich ist. Um dies zu ermöglichen, ist dem Arbeitstisch eine Absaugeinrichtung in den meisten Fällen in Form eines sog. Absaugmauls zugeordnet, von dem der Absaugluftstrom zu einem Filter, in den meisten Fällen ein Flachfilter, geführt und nach dem Filtern jeweils mittels zugehörigen Rohren oder Schläuchen abgeführt wird.

Bei einem bekannten zahntechnischen Arbeitsplatz ist der Filter ein rechteckiger oder quadratischer Flachfilter, der in einer Schublade des Arbeitstisches integriert ist. Es handelt sich dabei um einen sog. Austauschfilter, der nach einer gewissen Einsatzzeit, nach der das Filtergut den Filter weitgehend zugesetzt hat, ausgetauscht werden muß. Dies erfolgt durch Öffnen der Schublade und Austausch des Filters. Der Filter befindet sich dabei in einem Luftströmungsweg, der sich zur Schublade und dann wieder von dieser weg erstreckt. Die den Filter aufnehmende Schublade ist unter der Arbeitsplatte des Arbeitstisches angeordnet, wobei sie direkt unter der Arbeitsplatte gehalten sein kann oder sie kann auch als Teil eines Schubladenkastens innenseitig am zugehörigen Tischbein befestigt sein.

Aus der DE-A-29 13 871 ist ein zahntechnischer Arbeitstisch nach dem Oberbegriff des Anspruches 1 bekannt. Dieser Arbeitstisch umfaßt mehrere nebeneinander gelegene Arbeitsplätze, wobei eine gemeinsame Filtereinrichtung mit einem quer und mittig verlaufenden ersten Verbindungskanal vorgesehen ist, welcher sich im oberen Bereich des Arbeitstisches befindet und in welchem mehrere Staubfilterbeutel und Gebläse angeordnet sind. Unterhalb dieses Verbindungskanals befindet sich ein zweiter Verbindungskanal, welcher in eine Luftverteilerkammer mündet, die sich über die gesamte Höhe und Breite des Arbeitstisches erstreckt und eine Auslaßöffnung entsprechender Größe besitzt. Die Auslaßöffnung kann wahlweise seitlich, rückseitig oder oberhalb des Arbeitsplatzes angeordnet sein. Die Staubfilterbeutel und Gebläse des ersten Verbindungskanals bilden eine Filtervorrichtung. Der sich darunter befindliche zweite Verbindungskanal ist nicht Bestandteil der Filtervorrichtung, sondern bildet lediglich eine weiterführende Abluftleitung.

Der Erfindung liegt die Aufgabe zugrunde, einen zahntechnischen Arbeitstisch der eingangs angegebenen Art so auszugestalten, daß bei Gewährleistung einer guten Raumausnutzung eine einfache und kostengünstig herstellbare Ausgestaltung möglich ist.

Diese Aufgabe wird durch die Merkmale des Anspruchs 1 gelöst.

Erfindungsgemäß weist das Filtergerät die Form einer in der Vorderansicht gesehen schmalen Säule auf, die in ihrem Bereich das Traggestell ersetzt. Dabei ist es vorteilhaft, die Säulenhöhe so groß zu bemessen, daß sie dem Abstand zwischen dem Boden und der Tischplatte entspricht und somit die Tischplatte unmittelbar auf der Säule bzw. auf dem Filtergerät aufliegen kann. Es ist jedoch auch möglich, die Säulenhöhe etwas geringer zu messen, als der vorgenannte vertikale Abstand und zwischen der Tischplatte und der Säule bzw. dem Filtergerät und oben oder unten die Lücke durch ein Säulenteil oder Distanzstück zu schließen, z.B. durch eine Ablagen- oder Schubladenreihe anzuordnen.

Gemäß der vorliegenden Erfindung wird der vorhandene Raum deshalb optimal ausgenutzt, weil zum einen das zugehörige Tischbein im Bereich des Filtergerätes entfällt und deshalb auch dieser Raum entweder dem Filtergerät oder dem Freiraum unter dem Arbeitstisch zugute kommt.

Es ist von Vorteil, die Säule bzw. das Filtergerät in der sich von vorne nach hinten erstreckenden Abmessung an die entsprechende Breitenabmessung des Arbeitstisches so anzupassen, daß das zugehörige Tischbein ganz entfallen kann und das Filtergerät bzw. die Säule das zugehörige Tischbein völlig ersetzt. Bei einem Arbeitstisch, bei dem die Tischbeine durch sich von der Arbeitsplatte bis zum Boden erstreckende vertikale Seitenplanken gebildet sind, kann wenigstens auf der einen Seite eine solche Seitenplanke entfallen, da sie durch das Filtergerät ersetzt wird.

Im Rahmen der Erfindung ist es möglich, den Arbeitstisch an einer wahlweisen Seite oder an beiden Seiten mit einem erfindungsgemäßen Filtergerät auszubilden. Bei einem Arbeitstisch mit Überlänge, an dem mehrere Arbeitsplätze vorgesehen sind, kann das Filtergerät auch ein Tischbein im mittleren Bereich des Arbeitstisches im vorbeschriebenen Sinne ersetzen. Es ist im Rahmen der Erfindung auch möglich, mehrere Arbeitstische zusammenzustellen, z.B. zwei Arbeitstische an ihren Rückseiten oder drei Arbeitstische rückseitig/seitlich zusammenzustellen, wobei beispielsweise nur ein Filtergerät für eine solche Tischkombination vorgesehen sein kann. Dies ist insbesondere deshalb möglich, weil bei der erfindungsgemäßen Ausgestaltung aufgrund der verhältnismäßig großen zur Verfügung stehenden Höhe ein Filtergerät mit verhältnismäßig großer Kapazität verwirklicht werden kann, so daß ein Filtergerät für mehrere Arbeitstische ausreicht. Ein weiterer Vorteil der erfindungsgemäßen Ausgestaltungen besteht darin, daß aufgrund der verhältnismäßig großen zur Verfügung stehenden Bauhöhe für das Filtergerät der Filter über einen Sammelbehälter angeordnet werden kann und mit einer mechanischen oder pneumatischen Filterreinigungsvorrichtung versehen werden kann, ohne daß Probleme hinsichtlich der zur Verfügung stehenden, durch die Tischhöhe beschränkten Bauhöhe eintreten. Bei einem solchen Filtergerät läßt sich der Filter z.B. auf mechanischem Wege durch Erschütterungen oder Fliehkraft oder auf pneumatischem Wege mittels Filterspülung reinigen, wobei das Filtergut durch Schwerkraft in einen Sammelbehälter fallen und handhabungsfreundlich entsorgt werden kann. Durch eine solche Ausgestaltung läßt sich ein Filteraustausch vermeiden, wodurch nicht nur Zeit- und Materialaufwand sondern auch erhebliche Selbstkosten für die Filter eingespart werden können.

In den Unteransprüchen sind Merkmale enthalten, die zur Problemlösung beitragen, sich auf Ausgestaltungs- und Funktionseinzelheiten des Filtergerätes beziehen und außerdem eine vorteilhafte Zuordnung des Filtergerätes zum zugehörigen Arbeitsplatz ermöglichen.

Nachfolgend werden die Erfindung und weitere durch sie erzielbare Vorteile anhand einer Zeichnung und bevorzugter Ausführungsbeispiele näher erläutert. Es zeigt
- Fig. 1: ein Filtergerät mit integrierter Saugeinrichtung als säulenförmige kompakte Baueinheit in der Vorderansicht, teilweise vertikal geschnitten;
- Fig. 2: das Filtergerät im seitlichen Vertikalschnitt;
- Fig. 3: einen erfindungsgemäßen zahntechnischen Arbeitstisch mit einem Arbeitsplatz, einer Absaugvorrichtung und dem Filtergerät nach den Fig. 1 und 2 in perspektivischer Vorderansicht;
- Fig. 4 und 5: einen erfindungsgemäßen Arbeitstisch in abgewandelten Ausgestaltungen;
- Fig. 6: eine Einzelheit des erfindungsgemäßen Arbeitstisches in weiterer abgewandelter Ausgestaltung.

Die Hauptkomponenten des zahntechnischen Arbeitstisches T sind ein Arbeitsplatz P, eine letzterem zugeordnete Absaugvorrichtung S und ein unter der Arbeitstischplatte angeordnetes Filtergerät 1, das in noch zu beschreibender Weise eine Tragsäule für den Arbeitstisch T bildet und dabei aufgrund seiner kompakten Säulenform einen befriedigend großen Freiraum F unter dem Arbeitstisch T gewährleistet.

Im folgenden wird zunächst das Filtergerät 1 in seinen wesentlichen Einzelheiten beschrieben.

Das Filtergerät 1 ist ist mit seinen zugehörigen Einrichtungen in ein quaderförmiges Gehäuse 2 integriert, dessen Breite geringer ist als dessen Tiefe und das verhältnismäßig schmal und hoch gebaut und somit säulenförmig ist. In der Vorderansicht gesehen, beträgt seine Breite b etwa 30 cm, seine nach hinten gerichtete Tiefe t etwa 60cm und seine Höhe h etwa 80 cm. Diese Größe ermöglicht es nicht nur, das Filtergerät 1 raumgünstig aufzustellen, sondern es eignet sich auch dazu, zahntechnischen Arbeitsplätzen, insbesondere -tischen, als Beistellgerät zugeordnet zu werden. Das Filtergerät 1 ist höheneinstellbar, vorzugsweise mittels vertikal in den Gehäuseboden eingeschraubten und festgestellten Schrauben 2a. Die Bedienungsseite des Filtergerätes 1 ist der Frontseite des Arbeitstisches zugewandt. Es ist jedoch auch möglich, die Bedienungsseite seitlich oder rückseitig anzuordnen oder wenigstens einen Schalter für das Filtergerät am oder auf dem Arbeitstisch anzuordnen.

Das Gehäuse 2 begrenzt drei übereinander angeordnete Hauptabteilungen, nämlich eine untere Hauptabteilung 3, in der eine Saugeinrichtung, hier in Form eines von einem Motor 4 angetriebenen Ventilators 5, ungeordnet ist, eine mittlere Hauptabteilung 6, in der die eigentliche Filtervorrichtung 7 im oberen Bereich der Hauptabteilung 6 und darunter ein Filtergut-Sammelbehälter 8 angeordnet sind, und eine obere Hauptabteilung 9 für sonstige Einrichtungen, die bei der vorliegenden Ausgestaltung in zwei übereinander angeordete Einzelabteilungen unterteilt ist, die zur Aufnahme einer elektronischen Steuereinrichtung 13 und einem Fach 14 für Werkzeug oder Zubehör, z.B. in Form einer Schublade, ausgebildet ist, wobei bei der vorliegenden Ausgestaltung das Fach 14 über dem Fach für die Steuereinrichtung 13 angeordnet ist. Am Frontseitenteil der die Steuereinrichtung 13 aufnehmenden Einzelabteilung sind manuell zu bedienende Steuerelemente und Anzeigeelemente angeordnet.

Die vorgenannten Hauptabteilungen oder Hauptfunktions-abteilungen 3, 6 und 9 erstrecken sich im wesentlichen von der Frontwand 15 bis zur Rückwand 16 und von der einen bis zur anderen Seitenwand 17, 18, wobei die mittlere Hauptabteilung 6 frontseitig eine im wesentlichen den zugehörigen gesamten Frontseitenteil umfassende Haupföffnung 19 aufweist, die durch eine Tür 21 mittels einer Öffnungsranddichtung dicht verschließbar und somit von vorne zugänglich ist. In vergleichbarer Weise kann auch die untere Hauptabteilung 3 von vorne zugänglich sein. Bei der vorliegenden Ausgestaltung ist die untere Hauptabteilung 3 durch die mittlere Hauptabteilung 6 hindurch zugänglich. Hierzu ist die Bodenwand 22 der mittleren Hauptabteilung 6 lösbar und nach oben und vorne herausnehmbar angeordnet. Nach einem Herausnehmen der Bodenwand 22 ist somit die untere Hauptabteilung 3 von oben durch die Hauptöffnung 19 hindurch zugänglich. In vergleichbarer Weise ist auch die obere Hauptabteilung 9 von vorne zugänglich, wobei die elektronische Steuereinrichtung 13 in Form mehrerer Einzelteile oder als Block, hier in der Schublade, nach vorne herausziehbar und somit von vorne zugänglich sind. In den Seitenwänden 17, 18 sind keine Zugangsöffnungen vorhanden, so daß das Filtergerät 1 seitlich unmittelbar angestellt werden kann.

Die Filtervorrichtung 7 weist ein - abgesehen von erforderlichen Zugangs- und Abgangsöffnungen - geschlossenes Filtervorrichtungsgehäuse 23 auf, das durch eine horizontale Teilungsfuge 24 in ein Unterteil 26 und ein Oberteil 25 unterteilt ist, wobei das Unterteil 26 durch den topfförmigen Sammelbehälter 8 gebildet ist, der oben eine rechteckige Behälteröffnung 27 aufweist, die unterhalb des Filters 28 der Filtervorrichtung 7 angeordnet ist. Die Filtervorrichtung 7 weist eine Haltevorrichtung 29 für den hohlzylindrischen Filter 28 auf, die mittels eines Elektromotors 32 um eine Drehachse 33 drehbar ist, die sich bei der vorliegenden Ausgestaltung horizontal und rechtwinklig zur Bedienungsseite 34, d.h. von vorne nach hinten, erstreckt, wodurch die verhältnismäßig schmale Breite B und die verhältnismäßig große Tiefe T des Filtergeräts 1 gut ausgenutzt werden. Zwischen dem Oberteil 25 und dem Unterteil 26 ist eine Ringdichtung 24a angeordnet, die vorzugsweise an einem dieser Teile befestigt, insbesondere geklebt, ist.

Das Oberteil 25 des Filtervorrichtungsgehäuses 23 ist mit vertikalen Seitenwänden 35, einer vertikalen Vorderwand 36 und einer im wesentlichen vertikalen Rückwand 37 kastenförmig geformt, wobei der obere Bereich des Filtervorrichtungsgehäuses 23 mehrkantig oder gerundet domförmig geformt ist. An der Rückwand 37 ist koaxial zur Drehachse 33 ein rundes Tragrohr 38 mit radialen Löchern 40 befestigt, das die Rückwand 38 nach hinten durchsetzen und mit einer rückseitigen Verlängerung einen Anschlußstutzen 39 für einen Schlauch oder ein Rohr aufweisen kann. Am vorderen Ende des Tragrohrs 38 ist der Elektromotor 32 koaxial angeflanscht, dessen Antriebswellenzapfen 41 sich koaxial nach vorne erstreckt. Auf dem Antriebswellenzapfen 41 sitzt drehfest ein Triebflansch 42 mit einer Nabe, auf der die vordere von zwei runden Haltescheiben 44a, 44b aufschraubbar ist. Zwischen den Haltescheiben 44a, 44b ist der Filter 28 durch leichtes axiales Zusammendrücken gehalten. Die hintere Haltescheibe 44b ist mittels eines Wälzlagers 45 auf dem hinteren Bereich des Tragrohrs 38 frei drehbar gelagert und mittels einer Ringdichtung 46 abgedichtet. Die Haltescheiben 44a, 44b weisen auf ihren einander zugewandten Seiten jeweils eine an die Querschnittsform und Größe des Filters 28 angepaßte Ringnut auf, in denen der hohlzylindrische Filter 28 mit seinen Ringenden sitzt. Vorzugsweise ist innerhalb des Filters 28 ein hier ebenfalls hohlzylindrischer Sicherheitsfilter 48 angeordnet und zwischen den Haltescheiben 44a, 44b gehalten, die hier zu jeweils eine weitere innere Ringnut aufweisen, in denen die Ringenden des Sicherheitsfilters 48 sitzen. Zwischen dem Filter 28 und dem Sicherheitsfilter 48 ist ein radialer Abstand und somit ein Ringfreiraum 51 vorhanden. Der Filter 28 bzw. der Sicherheitsfilter 48 umgeben somit das Tragrohr 38 und den Elektromotor 32 koaxial und einem radialen Abstand, wodurch ein weiterer Ringfreiraum 52 gebildet ist.

Das Tragrohr 38 und der damit starr verbundene Elektromotor 32 sind durch ein Stützlager 53 an der Vorderwand 36 des Oberteils 26 abgestützt. Vorderseitig weist das Oberteil 25 eine Montageöffnung 54 auf, die größer bemessen ist, als die vordere Haltescheibe 44a und der Filter 28, so daß diese Teile von vorne montiert bzw. demontiert werden können. Die Montageöffnung 54, die bei der vorliegenden Ausgestaltung fast den gesamten Bereich der Vorderwand 36 einnimmt, ist durch eine Verschlußtür dicht verschließbar. Bei der vorliegenden Ausgestaltung ist eine nach unten wegklappbare Klapptür 55 vorgesehen, die im Bereich ihrer Unterkante in einem Gelenk 56 mit horizontaler Gelenkachse angelenkt ist und ein an ihrer Innenseite befestigtes Lagerteil, hier eine Lagernabe 58, trägt, des beim Schließen der Klapptür 55 in oder auf ein passendes Lagerteil, hier einen Lagerzapfen 57, steckbar ist, das mittels eines Wälzlagers 61 in der Nabe des Triebflansches 42 drehbar gelagert und dadurch axial gehalten ist, so daß es beim Öffnen der Klapptür 55 am Triebflansch 42 verbleibt. Beim Schließen der Klapptür 55 werden die vorgenannten Lagerteile 57 und 58 selbsttätig zusammengeführt, wobei dazwischen eine vorzugsweise formschlüssige Drehsicherung vorhanden sein kann, damit das Lagerteil 57 im Betrieb nicht mitdreht.

Die Teilungsfuge 24 befindet sich in einem nach unten gerichteten Abstand von der Unterseite des Filters 28.

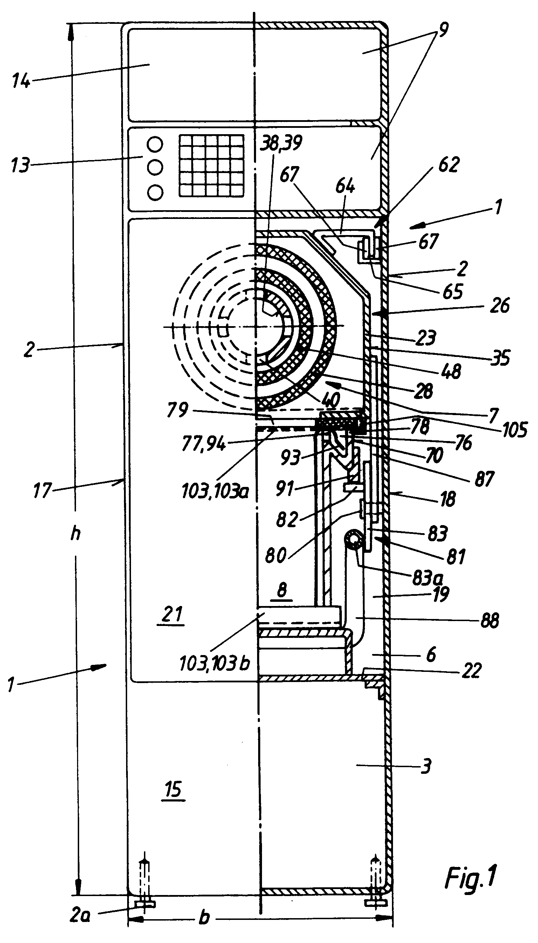

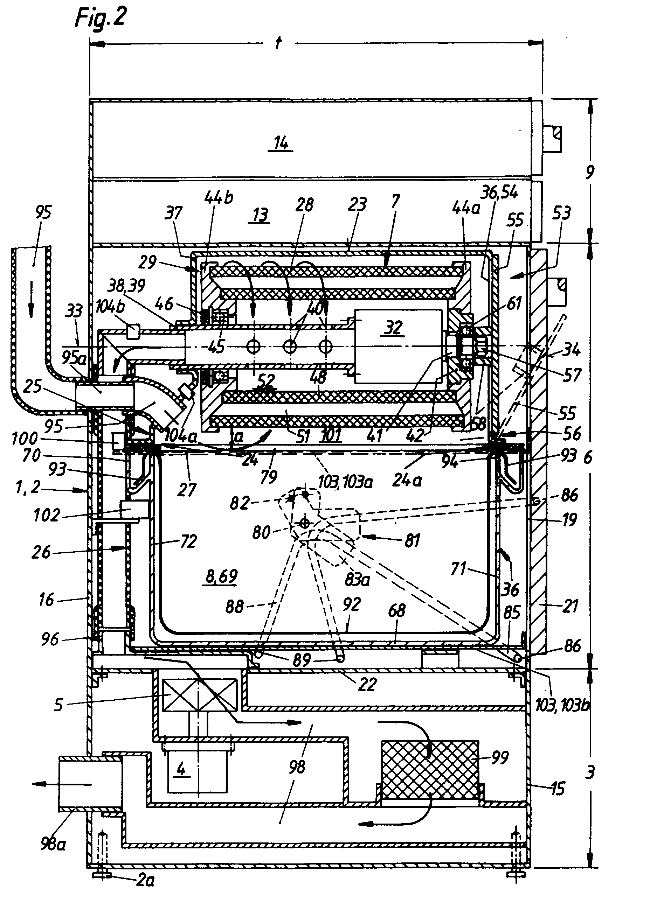

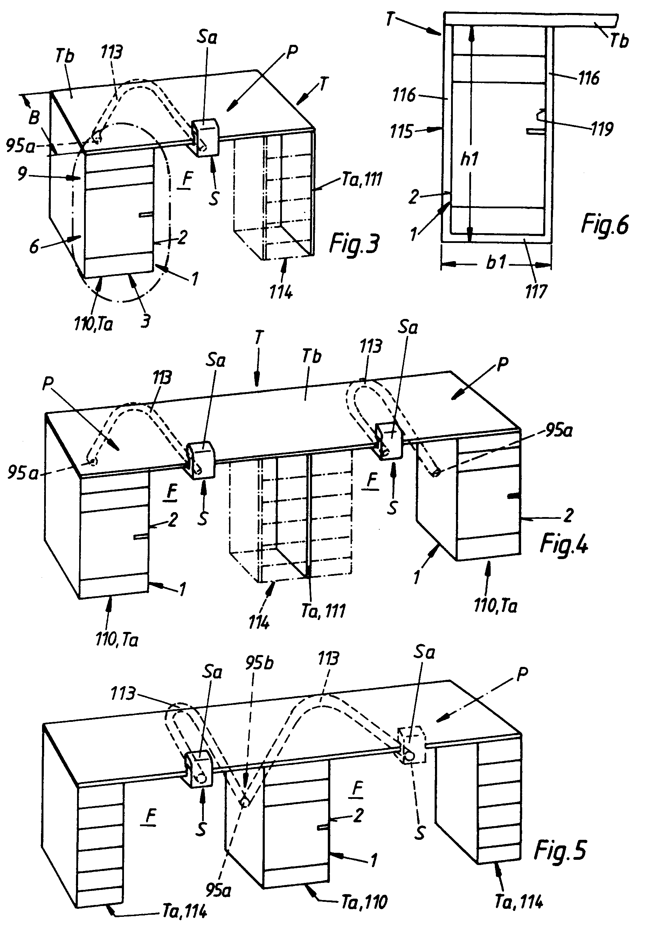

Das Filtervorrichtungsgehäuse 23 ist schwingungsgedämpft, nämlich vertikal und horizontal frei schwimmend bzw. federnd im Gehäuse 2 gelagert. Hierzu dient eine Aufhängevorrichtung 62 mit elastischen Tragteilen, insbesondere Gummistücken, am oberen Bereich des Oberteils 26. Wie insbesondere Fig. 1 deutlich zeigt, sind am Oberteil 26 seitlich abstehende Winkel-Tragschenkel 64 befestigt, die am Gehäuse 2 befestigte horizontale Tragschienen 65 übergreifen, wobei die Tragschenkel 64 bei Zwischenlage von elastischen Gummistücken auf den Tragschienen 65 abgestützt sind. Diese Ausgestaltung ermöglicht eine einfache und leichte Montage des Filtervorrichtungsgehäuses 23 durch Einschieben bzw. Herausziehen von vorne. Zwischen vertikalen Stegen der Tragschenkel 64 und Tragschienen 65 können vorzugsweise Schwingungsdämpfer 67 in Form von Gummistücken vorhanden sein, wobei horizontale Querschrauben vertikale Stege der Tragschenkel 64 und Tragschienen 65 und die Schwingungsdämpfer 67 durchfassen können.

Der topfförmige Sammelbehälter 8 weist eine im wesentlichen ebene Bodenwand 68 rechteckiger Form und vier sich von dieser nach oben erstreckende Umfangswände, nämlich zwei einander gegenüberliegende Seitenwände 69 sowie eine Vorderwand 71 und eine Rückwand 72 auf, so daß sich die rechteckige Behälteröffnung 27 ergibt, die von den Umfangswänden begrenzt ist und deren Form und Größe der unterseitigen Öffnung des Oberteils 26 entspricht. Der obere Randbereich des Sammelbehälters 8 ist durch einen nach außen abstehenden Kragen 70 mit einem seitlich abstehenden Kragenschenkel und einem sich von diesem nach oben erstreckenden Kragenschenkel, die eine nach oben offene Außenrinne 76 begrenzen. Sowohl der durch die Umfangswände gebildete Innenrand 77 als auch der Außenrand 78 liegen dicht an der flachen Ringdichtung 24a an, die an einem Randflansch am unteren Rand des Oberteils 26 befestigt ist. Die Höhe des Sammelbehälters 8 ist etwas geringer bemessen als der vertikale Abstand zwischen Tragteilen auf der Bodenwand 22, auf denen der Sammelbehälter 8 aufstellbar ist und der Unterseite des Oberteils 26. Der Sammelbehälter 8 kann somit bequem von vorne in die mittlere Hauptabteilung 6 eingeschoben und herausgezogen werden. Zum dichten Verschließen des Sammelbehälters 8 an der Unterseite des Oberteils 26 dient eine Schließvorrichtung 81, die den Sammelbehälter 8 untergreift und nach oben gegen das Oberteil 26 drückt und in dieser Position sichert. Vorzugsweise sind zu beiden Seiten des Sammelbehälters 8 spiegelbildlich angeordnete Schließvorrichtungen 81 mit Druckteilen z.B. in Form von quer angeordneten Druckbolzen 82 vorgesehen, die an einem auf Lagerbolzen 80 schwenkbar gelagerten Hebelarm 83 befestigt sind, von seitlich außen den Kragen 70 in etwa mittlerer Position untergreifen und durch Schwenken dieser Druckbolzen 82 durch gleichzeitiges Drehen der zu beiden Seiten angeordneten Hebelarme 82 den Sammelbehälter 8 anheben und gegen die Ringdichtung 24a drücken. In der Drehendstellung der Hebelarme 83 befinden sich die Druckbolzen 82 direkt über dem zugehörigen Lagerbolzen 80 oder vorzugsweise geringfügig hinter dem oberen Totpunkt, wodurch ein selbsttätiges Lösen der Schließvorrichtung 81 verhindert ist. Zur gleichzeitigen Drehung der Hebelarme 83 dient ein U-förmiger Handbügel 85, der den Sammelbehälter 8 von der Vorderseite her U-förmig umgreift. In der nach oben geschwenkten Offenstellung des Handbügels 85 befindet sich sein vorderer Bügelsteg 86 oberhalb des Sammelbehälters 8, so daß er seiner Einschiebung und Herausziehung nicht im Wege steht. Die Drehachsen 80 können an den Seitenwänden 17, 18 des Gehäuses 2 befestigt sein. Vorzugsweise sind die Drehachsen 80 am Oberteil 26 befestigt und zwar hier an von den Seitenwänden des Oberteils 26 nach unten ragenden Seitenwangen 87 befestigt. Hierdurch ist auch die Schließvorrichtung 81 ein Teil der Filterbaueinheit, und sie ist deshalb nicht nur mit dieser Baueinheit schwingungsgedämpft gelagert, sondern sie kann auch an dieser Baueinheit vormontiert werden.

Der Handbügel 85 ist vorzugsweise so angeordnet und bemessen, daß sein freies Bügelende in der Schließstellung (in Fig. 2 mit durchgezogenen Linien dargestellt) sich unmittelbar hinter der Innenfläche der Tür 21 und dabei in einem größeren Vertikalabstand von den Lagerbolzen 80 befindet. Bei einer solchen Anordnung kann die Tür 21 nur dann geschlossen werden, wenn sich der Handbügel 85 in seiner Schließstellung befindet. Bei einem nicht korrekten Verschluß befindet sich der Handbügel 85 oberhalb seiner Schließstellung, wobei er aufgrund seiner Bogenbewegung in den Bewegungsbereich der Tür 21 hineinsteht, so daß diese nicht geschlossen werden kann. Hierdurch ist eine mechanische Sicherheitsvorrichtung geschaffen, die der Bedienungsperson deutlich anzeigt, daß der Sammelbehälter 8 nicht dicht angeschlossen ist. Dies ist insbesondere bei der Filterung von gesundheitsgefährdenden Stoffen von Bedeutung, wie sie auch in der Dentaltechnik verwendet, um zu verhindern, daß diese Stoffe nach außen in den das Filtergerät 1 umgebenden Arbeitsraum gelangen.

Bei der vorliegenden Ausgestaltung ist der Handbügel 85 mit seinen freien U-Enden an Doppelarmen 83a der Hebelarme 83 befestigt. Dabei ist ein weiterer U-förmiger Verschlußbügel 88 vorgesehen, der sich von den Hebelarmen 83 nach unten erstreckt und mit seinem Bügelsteg 89 den Sammelbehälter 8 untergreift und dabei gleichzeitig zusätzlich stützt, wodurch die Druckbelastung von den Druckbolzen 82 auf den Kragen 70 reduziert werden kann. Um die Flächenpressung zwischen den Druckbolzen 82 und dem Kragen 70 zu verringern, ist es vorteilhaft, im Bereich der Druckbolzen 82 an der Unterseite des Kragens 70 eine Leiste 91 aus hartem Material, wie z.B. Stahl, einzubetten, oder in eine Nut fest einzusetzen, gegen die der zugehörige Druckbolzen 82 drückt.

Insbesondere beim Filtern von umweltschädlichen und gesundheitsgefährdenden Substanzen sind folgende Ausgestaltungen vorteilhaft. Damit beim Herausnehmen des Sammelhehälters 8 kein Staub vom Filter 28 oder vom Gehäuseoberteil 25 in das Gehäuse der Hauptabteilung 6 bzw. auf die Bodenwand 22 fällt, wird ein vorzugsweise plattenförmiger Schieber 103 nach dem Absenken des Sammelbehälters 8 (ca. 8mm nach unten) zwischen zwei seitlichen Führungsschienen 105 und dem Oberteil 25 bzw. der Ringdichtung 24a eingeschoben (Position 103a).

Der vorzugsweise aus ferro-magnetischem Material wie Stahl bestehende Schieber 103 kann mittels einer Haltevorrichtung oder einer Führung verschiebbar und dicht am Gehäuseoberteil 25 gehalten sein, z.B. mittels wenigstens einem, insbesondere an der Rückseite angeordneten, oder mehreren verteilt angeordneten Permanentmagneten 100, und gegen die Dichtung 24a gezogen oder gedrückt werden, um die Abdichtung während der Abwesenheit des Sammelbehälters 8 zu verbessern.

Die Führungsschienen 105 sind vorzugsweise Winkelschienen, die seitlich am Gehäuseoberteil 25 befestigt sind (Fig. 1).

Der Schieber 103 wird vor dem Absenken des Sammelbehälters 8 aus einer Parkposition 103b, in der er unter dem Sammelbehälter 8 eingeschoben ist, entnommen, ansonsten funktioniert der Absenkmechanismus nicht, da er gesperrt ist.

Der Sammelbehälter 8 läßt sich nach dem Entleeren auch nicht in die Funktionsstellung bringen, wenn nicht zuvor der Schieber 103 aus einer Parkposition 103b entfernt wurde. Dies läßt sich dadurch erreichen, daß der Handbügel 85, hier der Bügelsteg 89, gegen das vorzugsweise vordere Ende des Verschlußteils 103 stößt, in dessen Bewegungsbahn das Verschlußteil 103 in seiner Park- bzw. Abstellposition hineinragt, d.h. der Standhebel 85 läßt sich nicht unter den Sammelbehälter 8 schwenken, so daß sich auch die Tür 21 nicht schließen läßt.

Die Hubhöhe der Anschluß- bzw. Kupplungsvorrichtung ist etwas größer bemessen als die Dicke des Verschlußteils 103. In der Verschlußstellung des Verschlußteils 103 steht das vordere Ende nahe oder direkt hinter der Tür 21. Dies gilt vorzugsweise auch für die Abstellposition. Wenn die Tür 21 sich nicht schließen läßt, ist es ein Erkennungszeichen, daß der ordnungsgemäße bzw. dichte Anschluß des Sammelbehälters nicht gewährleistet ist. Durch einen Schaltkontakt (nicht dargestellt) zwischen der Tür 21 und dem Gehäuse 2 läßt sich dies durch einen Summer akustisch oder durch eine Warnlampe visuell verdeutlichen, oder es läßt sich auch durch eine Schaltung das Einschalten des Filtergerätes verhindern. Ein solcher Schaltkontakt kann auch zwischen dem Gehäuse 2 oder Anbauteilen und dem Verschlußteil 103 in dessen Verschlußstellung wirksam sein.

Das sind sehr vorteilhafte Sicherheitsmaßnahmen zur Vermeidung des unbeabsichtigten Entweichens von insbesondere gesundheitsgefährdenden Stäuben.

Außerdem wird der Schieber beim Herausziehen von der Dichtung 24a abgestreift, der Staub fällt dabei in den darunter stehenden Sammelbehälter 8.

Außerdem ist es vorteilhaft, im Sammelbehälter 8 einen Beutel 92 insbesondere aus Kunststoffolie anzuordnen, der vorzugsweise so tief bemessen ist, daß seine freien Ränder für die Entsorgung z.B. durch Verknoten beschlossen werden können. Der Beutel 92 ist am Rand des Sammelbehälters 8 abzudichten, damit möglichst kein Filtergut hinter den Beutel 92 oder in den Innenraum des Gehäuses 2 gelangt. Bei der vorliegenden Ausgestaltung wird der überstehende Rand 93 des in den Sammelbehälter 8 eingesetzten Beutels 92 über den Innenrand 77 gekrempelt und in die Außenrinne 76 gegebenenfalls gefaltet eingelegt. Hierdurch ist der Rand 93 zwischen dem Innenrand 77 und der Ringdichtung 46 festgeklemmt. Die eigentliche Dichtfunktion nach außen wird vom Kragen 70 gewährleistet, der von unten gegen die Ringdichtung 24a drückt. Im Innenrand 77 sind mehrere auf dem Umfang verteilt angeordnete Löcher oder Ausnehmungen 94 vorgesehen, deren Funktion weiter unten noch erklärt wird.

Das Filtervorrichtungsgehäuse 23 ist an eine vorzugsweise flexible Zuführungsleitung 95, insbesondere Schlauchleitung, für zu filternde Luft angeschlossen, die die Rückwand 16 des Gerätegehäuses 2 in einer Durchführung, z.B. in Form eines Anschlußstutzens 95a, durchsetzt und an einen Leitungsanschluß in der Rückwand 37 des Oberteils 26 angeschlossen ist. Ein weiterer vorzugsweise flexibler Rohr- oder Schlauchabschnitt erstreckt sich vom Anschlußstutzen 39 des Tragrohrs 38 zum Ventilator 5, wobei er an einen Anschlußstutzen 96 der Bodenwand 22 angeschlossen ist, der sich hinter dem Sammelbehälter 8 befindet. Unter der Bodenwand 22 befindet sich der Ventilator 5 in einem weiteren Leitungsabschnitt 98 in der unteren Hauptabteilung 3, die sich U-förmig zu einem Aktivkohlefilter 99 und dann zur Rückwand 16 erstreckt, die sie in einer Durchführung 98a durchsetzt und an die eine weiterführende Abführungsleitung angeschlossen sein kann.

Im folgenden wird die Funktion des Filtergeräts 1 beschrieben.

Vor einem Filtervorgang ist der Sammelbehälter 8 dicht am Oberteil 26 anzuschließen. Anschließend kann der Ventilator 5 eingeschaltet werden, wodurch der Filtervorgang beginnt. Der Ventilator 5 saugt aufgrund der Luftströmung die zu filternde Luft in den Innenraum des Filtervorrichtungsgehäuses 23 ein, der aufgrund seines gegenüber der Zuführungsleitung 95 vergrößerten Volumens einen Beruhigungsraum 101 darstellt. Der letzte Endbereich der Zuführungsleitung 95 ist schräg nach unten gerichtet, vorzugsweise in die Mitte des Sammelbehälters 8. Um dies auf einfache Weise zu ermöglichen, ist bei der vorliegenden Ausgestaltung die Rückwand 37 des Oberteils 26 im Bereich der Zuführungsleitungsdurchführung nach hinten schräg abfallend geformt. Beim Eintritt in den Beruhigungsraum 101 beruhigt sich die Strömung, wobei grobes Filtergut direkt in den Sammelbehälter 8 bzw. in den Beutel 92 absinkt. Leichteres Filtergut wird mit dem Luftstrom nach oben zum Filter 28 gelenkt, den einschließlich des Sicherheitsfilters 48 der Luftstrom auf der gesamten Mantelfläche radial einwärts durchströmt und durch die radialen Löcher 40 in das Tragrohr 38 und dann weiter zum Ventilator 5 strömt. Druckseitig vom Ventilator 5 wird die Luft noch durch den Aktivkohlefilter 99 geführt, und sie kann dann in den das Filtergerat 1 umgebenden Raum abgegeben werden oder in einer nicht dargestellten Rohr- oder Schlauchleitung weitergeführt und an die Außenatmosphäre abgegeben werden. Beim Durchströmen des Filters 28 lagert sich das Filtergut auf dessen Mantelfläche ab, so daß die Durchlässigkeit des Filters 28 sich verringert und der Unterdruck im Bereich zwischen dem Ventilator 5 und dem Filter 28 sich erhöht.

Vorzugsweise ist der Ventilator 5 bzw. Elektromotor 32 so drehzahlgeregelt, daß die geförderte Luftmenge immer einem vorbestimmten, optimalen Wert entspricht, was nach Maßgabe z.B. eines Durchflußmessers mittels einer Regeleinrichtung geregelt werden kann. Hierdurch wird nicht nur eine zu große Luftförderung bzw. -verbrauch verhindert, sondern in dem Fall, indem die zu filternde Luft von einem zahntechnischen Arbeitsplatz abgesaugt wird, wird zum einen verhindert, daß ein unangenehmer Luftzug an den Händen des Benutzers auftritt, oder zum anderen zu wenig Luft abgesaugt wird.

Der Beutel 92 ist dem beim Ein- und Ausschalten des Ventilators 5 und auch durch unterschiedliche Verschmutzungsgrade des Filters 28 Druckunterschieden ausgesetzt, die zu entsprechenden Bewegungen der Beutelwand führen, wodurch diese erheblich beansprucht wird und ermüden sowie brechen kann. Dieses Problem ist insbesondere beim Filtern umweltgefährender Substanzen von besonderer Bedeutung. Um diese Beanspruchungen des Beutels 92 zu vermeiden, ist wenigstens ein zur Außenseite des Beutels führender Bypass vorgesehen, der zu einem Druckausgleich innerhalb und außerhalb des Beutels 92 führt, wodurch die vorgenannten Belastungen auf den Beutel 92 vermieden sind. Bei der vorliegenden Ausgestaltung sind solche Bypässe durch die Löcher oder Ausnehmungen 94 gebildet, durch die sich der jeweils herrschende Druck in die Außenrinne 76 und von dort zur Rückseite des Beutels 92 fortpflanzen kann. Dabei bleibt durch den Außenrand 78 die Abdichtung des Filterraumes aufrechterhalten.

Wenn der Filter 26 sich im Laufe der Betriebszeit zusetzt und gereinigt werden soll, was sich durch eine Druckerhöhung im Bereich zwischen dem Filter 26 und dem Ventilator 5 bemerkbar macht, wird der Ventilator 5 abgeschaltet und anschließend - gegebenenfalls nach dessen Stillstand - der Elektromotor 32 eingeschaltet, der die Haltevorrichtung 29 mit dem Filter 28 in Rotation versetzt. Hierdurch wird das auf den Filter 28 gelagerte und gegebenenfalls auch geringfügig in den Filter 28 eingedrungene Filtergut abgeschleudert, wodurch die beabsichtigte Reinigung erzielt wird. Bei Versuchen, bei denen ein hohlzylindrischer Filter 28 mit einem Durchmesser von etwa 180 mm verwendet wurde, hat sich eine Drehzahl von etwa 1200 Umdrehungen pro Minute als ausreichend erwiesen, um den Filter 28 in der vorbeschriebenen Weise zu reinigen. Diese Reinigung kann an der Arbeitsstelle des Filters 28 erfolgen, ohne daß er demontiert zu werden braucht.

Das vom Filter abgeschleuderte Filtergut fällt zwangsläufig aufgrund der Schwerkraft in den Sammelbehälter 8. Die Reinigungswirkung ist am größten, wenn die Außenmantelfläche des Filters 28 kreisrund ist, weil die beim Drehen entstehende Fliehkraft direkt auf das Filtergut wirken kann. Es ist bei Versuchen jedoch ermittelt worden, daß auch solche hohlzylindrischen Filter, bei denen die Filtermantelfläche durch sich in Umfangsrichtung aneinander anschließende Falten gebildet wird, sich vorzüglich dazu eignet, nach dem erfindungsgemäßen Verfahren gereinigt zu werden.

Die Reinigungswirkung kann dadurch forciert werden, daß während der Drehung, d.h. während der Beaufschlagung des Filtergutes mit Fliehkraft, der Filter 28 etwas erschüttert wird, z.B. durch Klopfen oder Vibrieren. Solche Erschütterungen forcieren die Ablösung des Filterguts vom Filter 28.

Für die Zeitpunkte, zu denen der Filter 28 in Rotation versetzt werden soll, gibt es verschiedene Möglichkeiten. Wenn in der Strömungsleitung zwischen dem Filter 28 und dem Ventilator 5 ein Unterdrucksensor vorgesehen ist, der durch Signalleitungen mit der vorhandenen Steuer- oder Riegeleinrichtung verbunden ist, dann kann der Filter 28 automatisch in Rotation versetzt werden, wenn ein bestimmter Unterdruck überschritten wird.

Alternativ hierzu kann auch eine Differenzdruckmeßeinrichtung oder ein Differenzdruckschalter eingesetzt werden, der die Unterdruckdifferenz vor und nach dem Filter 28 mißt. Hierzu kann ein Drucksensor 104a im Gehäuseoberteil 25 und ein Unterdrucksensor 104b in der Strömungsleitung zwischen Filter 28 und Ventilator 5 vorgesehen sein.

Es ist aber auch möglich, daß der Unterdrucksensor lediglich eine Anzeige in Funktion setzt, die der Bedienungsperson signalisiert, daß der Filter 28 von Hand eine bestimmte Zeit lang in Rotation versetzt werden soll. Für diesen Fall ist dem Filtergerät 1 ein entsprechendes Bedienungselement zugeordnet. Eine andere Möglichkeit besteht darin, - falls kein Unterdrucksensor vorgesehen ist - eine Rotation des Filters 28 in unregelmäßigen oder regelmäßigen (beispielsweise jeden Morgen) vorzusehen.

Anstatt einer Unterdrucküberwachung kann auch das geförderte Luftvolumen überwacht bzw. gemessen werden, um eine Drehung des Filters 28 zu bestimmen und einzuleiten.

Der Filtervorgang kann nach Abschaltung der Rotation wieder begonnen werden.

Dem Sammelbehälter 8 ist eine Einrichtung zur Überwachung oder Messung des Füllstandes zugeordnet. Hierbei kann es sich um ein Schauglas oder eine elektrisch funktionierende Einrichtung handeln. Bei der vorliegenden Ausgestaltung ist ein gegebenenfalls kapazitiv wirksamer Füllstandsmesser 102 mittels einem Halter innen am Gehäuse 2 befestigt, der durch eine nicht dargestellte Signalleitung mit der elektronischen Steuereinrichtung 13 verbunden ist und ein Warnsignal abgibt oder vorzugsweise den Ventilator 5 und somit das Filtergerät abschaltet.

Ein erfindungsgemäßes Filtergerät 1 eignet sich jeweils sowohl für einen oder zwei zahntechnische Arbeitsplätze, oder es kann bei entsprechender Kapazitätsauslegung auch mit einer Vielzahl Arbeitsplätze verbunden sein. Dabei kann das Filtergerät 1 im die Behandlungsplätze enthaltenden Raum angeordnet sein, oder es kann in einem besonderen Raum oder auch außen von einem die Arbeitsplätze enthaltenen Gebäude angeordnet sein. Im ersten Falle läßt sich Heizenergie einsparen, da die gefilterte Luft dem Raum wieder zugute kommt.

In allen vorbeschriebenen Fällen ist es vorteilhaft, den Ventilator 5 in Abhängigkeit von der Einschaltung eines Bearbeitungsgerätes an wenigstens einem der vorhandenen Arbeitsplätze so zu steuern, daß nur bei der Einschaltung wenigstens eines der vorhandenen Arbeitsgeräte der Ventilator in Betrieb gesetzt wird.

Bei allen Ausführungsbeispielen ist das Filtergerät 1 im Bereich eines Tischbeines Ta angeordnet, wobei es als Tragsäule 110 ein Tischbein Ta bildet und somit ein übliches Tischbein ersetzt. Vorzugsweise ist die Tiefe t des Filtergerätes 1 an die Breite B des Arbeitstisches T angepaßt oder etwas geringer bemessen, so daß der Arbeitstisch T eine gute Standfestigkeit besitzt. Dabei kann mittels den dem Filtergerät 1 in seinem vorderen und hinteren Bereich zugeordneten höheneinstellbaren Fußstücken 2a einen Höhenausgleich und eine Anpassung an Unebenheiten des Bodens in einfache Weise durchgeführt werden. Vorzugsweise sind vertikale Schrauben vorgesehen, die mit ihren Köpfen auf dem Boden aufstehen und durch eine Mutter in ihrer jeweiligen angeschraubten Höheneinstellung feststellbar sind.

Bei der Ausgestaltung gemäß Fig. 3 ersetzt das Filtergerät 1 ein Tischbein Ta in Form einer seitlichen vertikalen Seitenplanke 111, wie sie an der gegenüberliegenden Seite des Arbeitstisches T, hier an der rechten Seite, vorhanden ist und sich vom Boden bis zur Unterseite der Arbeitsplatte Tb erstreckt und dabei vorzugsweise an der seitlichen Außenkante der Arbeitsplatte Tb angeordnet ist.

Bei der Absaugvorrichtung S handelt es sich um eine an sich übliche Bauart mit einer Absaughaube Sa, die im mittleren Vorderkantenbereich der Arbeitsplatte Tb befestigt ist und mit ihrer Saugöffnung nach hinten auf die Arbeitsfläche der Arbeitsplatte Tb gerichtet ist. Die Absaughaube Sa ist durch eine direkt unter der Arbeitsplatte Tb sich nach hinten erstreckenden Saugrohr oder -schlauch 113 mit dem Einlaßstutzen 95a des Filtergerätes 1 verbunden. In Fig. 3 ist andeutungsweise dargestellt, daß das Tischbein bzw. die Seitenplanke 111 durch eine Tragsäule 114 mit mehreren übereinander angeordneten Schubladen und Fächern ersetzt sein kann oder eine solche Tragsäule 114 an der Innenseite der Seitenplanke 111 angeordnet oder als schwebender Kasten daran befestigt sein kann.

Beim Ausführungsbeispiel nach Fig. 4, bei dem gleiche oder vergleichbare Teile mit gleichen Bezugszeichen versehen sind, ist bei einem Arbeitstisch T mit zwei nebeneinander angeordneten Arbeitsplätzen P an beiden Seiten ein Filtergerät 1 als Tragsäule 110 angeordnet, wobei in der Mitte zwischen den Arbeitsplätzen P ein Tischbein Ta in Form einer Seitenplanke 111, einer oder zwei Tragsäulen 114 oder in anderer Form vorhanden sein kann.

Beim Ausführungsbeispiel nach Fig. 5, bei dem gleiche oder vergleichbare Teile mit gleichen Bezugszeichen versehen sind, unterscheidet sich von den vorbeschriebenen Ausführungsbeispielen dadurch, daß das Filtergerät 1 nicht seitlich sondern mittig unter der Arbeitsplatte Tb angeordnet ist, wobei zu beiden Seiten des Filtergerätes 1 ein Arbeitsplatz P vorhanden sein kann. Dabei kann nur einer oder beide dieser Arbeitsplätze P mit einer Absaugvorrichtung S ausgerüstet sein. Wenn zwei Absaugvorrichtungen S vorgesehen sind, bedarf es eines Abzweigs 95b zur Verbindung beider Saugschläuche 113 mit dem Filtergerät 1. Es können zu beiden Seiten Seitenplanken 111 und/oder Tragsäulen 114 vorgesehen sein.

Bei den Ausführungsbeispielen gemäß Fig. 4 und 5 kann der Arbeitstisch T mehr als nur zwei nebeneinanderliegende Arbeitsplätze P aufweisen, wobei diese Mehrzahl der Arbeitsplätze von nur einem Filtergerät 1 oder mehreren Filtergeräten 1 in entsprechender Anzahl versorgt werden können.

Bei den vorbeschriebenen Ausgestaltungen bildet das Gehäuses 2 des Filtergerätes 1 die Tragsäule 110. Es ist im Rahmen der Erfindung jedoch auch möglich, die Tragsäule 110 durch ein zusätzliches kastenförmiges Gehäuse 115 entsprechender Breite b1, Höhe h1 und Tiefe mit zwei Seitenwänden 116, gegebenenfalls einer Bodenwand 117 und gegebenenfalls einer Rückwand zu bilden, das eine frontseitige Einschuböffnung 119 in einer solchen Größe aufweist, die an die zugehörigen Querschnittsabmessungen des Filtergerätes 1 angepaßt ist, so daß letzteres von vorne in das zusätzliche Gehäuse 115 wahlweise einschiebbar und wieder herausziehbar ist. Eine solche Ausgestaltung ermöglicht es, wahlweise ein Filtergerät 1 oder einen nicht dargestellten Kasten entsprechender Abmessungen mit übereinander angeordneten Schubladen - ähnlich der Tragsäule 114 - vorzusehen und durch Einschub oder Herausziehen wahlweise zu montieren. Hierdurch wird einer gewünschten Variabilität und auch Nachrüstbarkeit in einfacher und vorteilhafter Weise Rechnung getragen.

Es ist auch möglich, ein Filtergerät 1 bei den Ausgestaltungen gemäß Fig. 3 bis 5 wahlweise vorzusehen oder nachträglich auszutauschen, was durch den Einsatz von lösbaren Verbindungselementen und z.B. Schrauben in einfacher Weise möglich ist.

Es ist auch möglich und raumgünstig, den Einlaßstutzen 95a oder Einlaß nicht rückseitig sondern im hinteren Bereich der Innenseite des Filtergerätes 1 oder Gehäuses 115 anzuordnen.

Die Abluft des Filtergeräts 1 kann sowohl direkt in den Raum geblasen werden (keine Energieverluste) als auch über ein damit verbindbares Abluftkanalsystem ins Freie geleitet werden.

## Patentansprüche

1. Zahntechnischer Arbeitstisch (T),
mit einer Tischplatte (Tb), die auf einem Traggestell (Ta) angeordnet ist,
mit wenigstens einem, auf der Tischplatte (Tb) angeordneten Arbeitsplatz (P) mit einer Absaugvorrichtung (S), und
mit einem Filtergerät (1),
**dadurch gekennzeichnet,**
daß das Filtergerät (1) ein quaderförmiges Gehäuse (2) aufweist, dessen Breite (b) geringer ist als dessen Tiefe (t) und Höhe (h), und das eine Tragsäule (110) bildet, die in ihrem Bereich das Traggestell (Ta) ersetzt,
daß in dem Gehäuse (2) eine Filtervorrichtung (7) und darunter ein Filtergut-Sammelbehälter (8) angeordnet sind, die von vorne zugänglich sind, und daß das Filtergerät (1) seitlich neben dem Arbeitsplatz (P) angeordnet ist und durch einen sich unter der Tischplatte (Tb) erstreckenden Saugleitungsabschnitt (113) mit der Absaugvorrichtung (S) verbunden ist.

2. Zahntechnischer Arbeitstisch nach Anspruch 1,
**dadurch gekennzeichnet,**
daß die Höhe (h, h1) der Tragsäule (110) dem Abstand der Tischplatte (Tb) vom Boden entspricht.

3. Zahntechnischer Arbeitstisch nach einem der vorhergehenden Ansprüche,
**dadurch gekennzeichnet,**
daß bei einem Arbeitstisch (T) mit zwei nebeneinander angeordneten Arbeitsplätzen (P) an beiden Seiten des Arbeitstisches (T) ein eine Tragsäule (110) bildendes Filtergerät (1) oder ein gemeinsames eine Tragsäule (110) bildendes Filtergerät (1) an einer Seite oder in mittlerer Position vorgesehen ist.

4. Zahntechnischer Arbeitstisch nach einem der vorhergehenden Ansprüche,
**dadurch gekennzeichnet,**
daß die Absaugvorrichtung (S) durch eine im mittleren Vorderkantenbereich des zugehörigen Arbeitsplatzes (P) angeordnete Absaughaube (Sa) gebildet ist, die durch den Saugleitungsabschnitt (113) mit dem zugehörigen Filtergerät (1) verbunden ist, oder mehrere Absaughauben (Sa) mittels zugehörigen Saugleitungsabschnitten (113) und einem Abzweig (95b) mit einem gemeinsamen Filtergerät (1) verbunden sind.

5. Zahntechnischer Arbeitstisch nach einem der vorhergehenden Ansprüchen,
**dadurch gekennzeichnet,**
daß eine Abluftleitung (98a) des Filtergeräts (1) in den das Filtergerät (1) umgebenden Raum oder außerhalb des das Filtergerät aufnehmenden Raumes (Gebäudes) mündet, z.B. im Freien.

## Claims

1. Dental work table (T),
having a table top (Tb) disposed on a supporting frame (Ta),
having at least one workstation (P) with an extraction device (S) disposed on the table top (Tb), and
having a filter unit (1),
**characterized in**
that the filter unit (1) comprises a cube-shaped housing (2), the width (b) of which is less than its depth (t) and height (h) and which forms a supporting column (110), which in its region replaces the supporting frame (Ta),
that disposed in the housing (2) is a filter device (7) and below the latter a filtered material collecting container (8), which are accessible from the front, and
that the filter unit (1) is disposed laterally alongside the workstation (P) and is connected to the extraction device (S) by a suction line section (113) extending under the table top (Tb).

2. Dental work table according to claim 1,
**characterized in**
that the height (h, h1) of the supporting column (110) corresponds to the distance of the table top (Tb) from the floor.

3. Dental work table according to one of the preceding claims,
**characterized in**
that, given a work table (T) having two workstations (P) disposed side by side, a filter unit (1) is provided at both ends of the work table (T) or a common filter unit (1) forming a supporting column (110) is provided at one end or in a central position.

4. Dental work table according to one of the preceding claims,
**characterized in**
that the extraction device (S) is formed by an extraction hood (Sa), which is disposed in the middle front edge region of the associated workstation (P) and connected by the suction line section (113) to the associated filter unit (1), or a plurality of extraction hoods (Sa) are connected by means of associated suction line sections (113) and a branch (95b) to a common filter unit (1).

5. Dental work table according to one of the preceding claims,
**characterized in**
that an exhaust air line (98a) of the filter unit (1) opens into the area surrounding the filter unit (1) or outside of the area (building) accommodating the filter unit, e.g. into the open air.

## Revendications

1. Table de travail de dentisterie (T), comportant
un plateau de table (Tb) qui est disposé sur un châssis de support (Ta),
au moins un poste de travail (P) agencé sur le plateau de table (Tb), avec un dispositif d'extraction (S) et
un appareil de filtrage (1),
caractérisée
par le fait que l'appareil de filtrage (1) comporte une enveloppe (2) en forme de parallélépipède, dont la largeur (b) est inférieure à sa profondeur (t) et sa hauteur (h) et qui forme une colonne de support (110) qui remplace le châssis de support (Ta) dans sa région,
par le fait qu'un dispositif de filtre (7) et, en dessous de celui-ci, un récipient de collecte de filtrat (8) sont disposés dans la carrosserie (2) et sont accessibles par le devant et
par le fait que l'appareil de filtrage (1) est disposé sur le côté du poste de travail (P) et est relié au dispositif d'extraction (S) par un tronçon de conduite d'aspiration (113) qui s'étend sous le plateau de table (Tb).

2. Table de travail de dentisterie selon la revendication 1. caractérisée par le fait que la hauteur (h, h1) de la colonne de support (110) correspond à la distance entre le plateau de table (Tb) et le sol.

3. Table de travail de dentisterie selon une des revendications précédentes, caractérisée par le fait que dans le cas d'une table de travail (T) avec deux postes de travail (P) disposés l'un à côté de l'autre , il est prévu un appareil de filtrage (1) formant colonne de support (110) sur deux côtés de la table de travail (T) ou un appareil de filtrage (1) commun formant une colonne de support (110) disposée sur un côté ou dans une position centrale.

4. Table de travail de dentisterie selon une des revendications précédentes, caractérisée par le fait que le dispositif d'extraction (S) est formé d'une hotte d'extraction (Sa) qui est disposée dans la région médiane du bord avant du poste de travail (P) concerné et est connectée à l'appareil de filtrage (1) concerné par un tronçon de conduite d'aspiration (113) ou que plusieurs hottes d'extraction (Sa) sont connectées à un appareil de filtrage (1) commun par des tronçons de conduites d'aspiration (113) et une bifurcation (95b).

5. Table de travail de dentisterie selon une des revendications précédentes, caractérisée par le fait qu'une conduite d'évacuation d'air (98a) de l'appareil de filtrage (1) débouche dans la pièce dans laquelle l'appareil de filtrage (1) est placé ou à l'extérieur de la pièce (bâtiment) dans laquelle l'appareil de filtrage (1) est placé, par exemple à l'air libre.
